# EUROPÄISCHE PATENTSCHRIFT

(11) **EP 0 835 897 B1**
(45) Veröffentlichungstag und Bekanntmachung des Hinweises auf die Patenterteilung: **28.11.2001**
(21) Anmeldenummer: 97116837.2
(22) Anmeldetag: 27.09.1997
(51) Int. Cl.: C08G 77/38, C09D 183/06, C09D 5/03

(54) **Siliconpoly(meth)acrylate, deren Herstellung und deren Verwendung in Beschichtungen**
Silicone poly(meth)acrylates, their preparation and use for coatings
Siliconepoly(méth)acrylates, leur préparation et usage pour revêtements

(30) Priorität: 11.10.1996 DE 19642269
(43) Veröffentlichungstag der Anmeldung: 15.04.1998
(73) Patentinhaber: Goldschmidt AG, 45127 Essen (DE)
(72) Erfinder: Josten, Wolfgang, Dr., 45133 Essen (DE); Reusmann, Gerhard, Dr., 48147 Münster (DE); Silber, Stefan, Dr., 47804 Krefeld (DE)

(56) Entgegenhaltungen:
- EP-A- 0 205 827
- EP-A- 0 275 051
- DE-A- 4 240 108
- DE-C- 4 414 465

## Beschreibung

Die vorliegende Erfindung betrifft Siliconpoly(meth)acrylate, ein Verfahren zu deren Herstellung aus Alkoxysiloxanen und hydroxyfunktionellen Poly(meth)acrylaten sowie deren Verwendung als Zusatzstoff in Beschichtungen, insbesondere als Antigraffiti-Zusatz.

Die Häufigkeit von in der Öffentlichkeit erstellten, unerwünschten Graffitis hat in den letzten Jahren immer mehr zugenommen. Oft sind allgemein zugängliche Gebäude und Verkehrsmittel betroffen. Da die Entfernung in den meisten Fällen nicht durch einfaches Abwaschen erfolgen kann, ist im Regelfall eine arbeits- und kostenintensive Neubeschichtung der mit Graffitis verschmutzten Flächen nötig. Deshalb wird bereits seit einiger Zeit nach Möglichkeiten gesucht, unerwünschte Graffitis einfach und kostengünstig zu entfernen.

So wurden Schutzüberzüge, die fluorhaltige Polymere enthalten, wie beispielsweise in US-A-4 929 666 und US-A-5 006 624 beschrieben, entwickelt. Schmutzabweisende Eigenschaften werden hier durch die Erniedrigung der Oberflächenspannung der Beschichtung erreicht. Nachteilig ist jedoch bei fluorhaltigen Produkten unter anderem der hohe Preis.

In der DE-A-35 35 283 werden polyestergruppenhaltige Polysiloxane für Lacke und Formmassen beschrieben. Das Polysiloxan erzeugt eine antiadhäsive Eigenschaft der Lacke oder Formmassen.

Zur Erzielung eines ausreichenden Effektes ist aber eine sehr hohe Einsatzkonzentration nötig, so daß andere Lackeigenschaften negativ beeinflußt werden können.

Die Umesterung von Poly(meth)acrylaten mit hydroxyfunktionellen Siloxanen ist in der DE-A-44 14 465 beschrieben. Diese geschieht selektiv an den Kettenenden des Polymergerüsts und läßt ebenfalls nur eine begrenzte Modifizierungsdichte zu.

Hydroxyfunktionelle (Meth)acrylate werden mit hydroxyfunktionellen Siloxanen gemäß EP-A-0 368 320 über mindestens difunktionelle Isocyanate unter Ausbildung von Urethanbindungen verknüpft. Polyfunktionelle, hydroxyfunktionelle (Meth)acrylate neigen unter diesen Bedingungen jedoch leicht zur Gelierung.

Durch Copolymerisation von α,ω-ungesättigten Siloxanmonomeren mit (Meth)acrylatmonomeren werden gemäß EP-A-0 117 311 oder EP-A-0 205 827 siloxanmodifizierte (Meth)acrylate hergestellt.

In der EP-A-0 603 561 werden polydimethylsiloxanhaltige Bindemittel beschrieben, die durch radikalisch initiierte Polymerisation von (Meth)acrylatmonomeren oder vinylaromatischen Monomeren in Gegenwart von α,ω-funktionellen Polysiloxanen erhalten werden. Bei dieser Umsetzung bleiben die funktionellen Gruppen der eingesetzten Polysiloxane weitgehend erhalten. Da die Fixierung der Polysiloxane in der durch die Polymerisation der Monomeren gebildeten Bindemittelmatrix weitestgehend nur physikalisch erfolgt (ineinander verschlaufte Polymernetzwerke) treten Unverträglichkeiten mit Lacksystemen auf. Die Systeme zeigen auch ungenügende Resistenz gegen Verschmutzungen wie z. B. gegen Filzstifte.

Eine Aufgabe der Erfindung ist daher die Bereitstellung von Überzugskomponenten, die für schmutzabweisende Beschichtungen geeignet sind und ihre schmutzabweisende Wirkung über einen langen Zeitraum von z. B. mehreren Jahren beibehalten. Dies beinhaltet auch die Permanenz des schmutzabweisenden Effektes über mehrere Reinigungszyklen hinweg.

Überraschenderweise hat sich gezeigt, daß diese Aufgabe gelöst werden kann durch Überzugsmittel, die als Lackbestandteil in Konzentrationen von 0,01 bis 15 %, bevorzugt von 1 bis 10 %, die über Kondensationsreaktionen aus Alkoxysiloxanintermediates erhaltene Siliconpoly(meth)acrylate enthalten.

Einen Gegenstand der Erfindung bilden daher als Zusatzstoff für Überzugsmittel geeignete modifizierte Polysiloxane.

Die erfindungsgemäßen Verbindungen können beispielsweise als Zusatzstoffe in wasserbasierenden, lösemittelbasierenden oder pulverförmigen Lacken oder Druckfarben - unter anderem auch als Entlüfter, Gleit- und Verlaufmittel usw. - Verwendung finden. Typische Einsatzkonzentrationen liegen zwischen 0,01 und 15 Gew.-%.

Die erfindungsgemäßen Verbindungen entsprechen der allgemeinen Formel 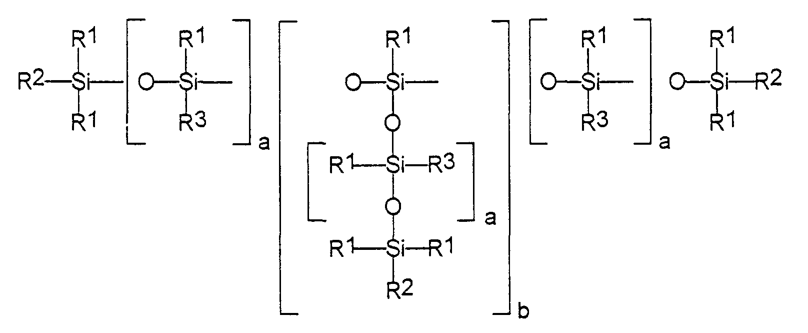 wobei die Reste
- R¹ =: gleiche oder verschiedene aliphatische oder aromatische Kohlenwasserstoffreste sind, wobei mindestens 90 % der Gruppen R¹ Methylgruppen entsprechen,
- R² =: gleiche oder verschiedene Alkoxyreste oder gleiche oder verschiedene hydroxyfunktionelle Poly(meth)acrylatreste mit einem OH-Gehalt von 1-10 Gew.-% darstellen, wobei mindestens 20 % der Gruppen R² hydroxyfunktionelle Poly(meth)acrylatreste sind,
- R³ =: R¹ oder R² ist,
- a =: 1 bis 100 und
- b =: 0 bis 20 ist.

Es ist dem Fachmann geläufig, daß die Verbindungen in Form eines Gemisches mit einer im wesentlichen durch statistische Gesetze geregelten Verteilung vorliegen. Die Werte für die Indizes a und b stellen deshalb Mittelwerte dar.

Die erfindungsgemäßen Siliconpoly(meth)acrylate sind zugänglich über metallkatalysierte nucleophile Substitution von zum Beispiel handelsüblichen, hydroxyfunktionellen Poly(meth)acrylaten an Organoalkoxysiloxanen.

Dabei erfolgt die Verknüpfung der Polymersegmente über eine Si-O-C-Bindung, wobei mindestens 20 % der Gruppen R² hydroxyfunktionelle Poly(meth)acrylatreste sind. Insbesondere bevorzugt sind zudem Copolymere, in denen maximal 70 % der Gruppen R² hydroxyfunktionelle Poly(meth)acrylatreste darstellen.

Im Sinne dieser Anmeldung sind unter hydroxyfunktionellen Poly(meth)acrylaten Polymerisationsprodukte von Acrylaten und/oder Methacrylaten sowie auch entsprechende Copolymerisationsprodukte mit anderen ungesättigten Verbindungen zu verstehen, die mindestens eine reaktive, an Kohlenstoff gebundene Hydroxylgruppe besitzen.

Die Synthese dieser hydroxyfunktionellen Poly(meth)acrylate erfolgt durch dem Stand der Technik entsprechende Verfahren der radikalischen Polymerisation. Bevorzugte hydroxyfunktionelle Acrylatmonomere sind Hydroxyethylacrylat, Hydroxypropylacrylat, Hydroxyethylmethacrylat sowie Hydroxypropylmethacrylat.

Im Sinne dieser Erfindung sind die hydroxyfunktionellen Poly(meth)acrylate mit einem mittleren Molekulargewicht (Mw) von 2000 bis 30 000 bevorzugt.

Beispiele für solche handelsüblichen, hydroxyfunktionellen Poly(meth)acrylate sind u.a. Jagotex F 237 (Fa. Ernst Jäger, Düsseldorf), Kacryl Al 190 (Fa. Kapol-Chemie, Hamburg), Synthalat A 191 (Fa. Synthopol Chemie, Buxtehude), Joncryl 500 (Fa. SC Johnson Polymer, Mijdrecht), Desmophen A 665 BW (Fa. Bayer AG, Leverkusen).

Die für die Umsetzungen mit hydroxyfunktionellen Poly(meth)-acrylaten eingesetzten Siloxane können beispielsweise folgende Struktur aufweisen

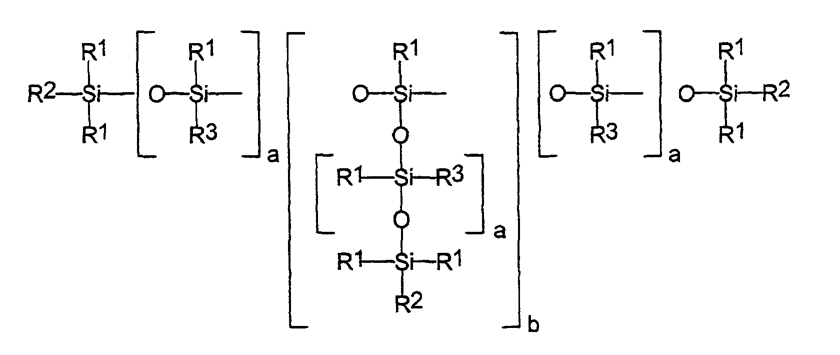

| Verbindung | a = | b = | R¹ = | R² = | R³ = |
|---|---|---|---|---|---|
| 1 | 6 | 0 | Me | OEt | Me |
| 2 | 12 | 0 | Me | OEt | Me |
| 3 | 19 | 0 | Me | OMe | Me |
| 4 | 8 | 2 | Me | OEt | Me |

Durch die Kondensation dieser Siloxane mit hydroxyfunktionellen Poly(meth)acrylaten wird vorzugsweise ein Teil, jedoch mindestens 20 % der Gruppen R² durch hydroxyfunktionelle Poly-(meth)acrylatreste ersetzt.

Der jeweilige Umsetzungsgrad ist mittels ²⁹-Si-NMR-Spektroskopie ermittelbar.

Beispiele für erfindungsgemäße Siliconpoly(meth)acrylate sind nun:

| Verbindung | a = | b = | R¹ = | R² = | R³ = |
|---|---|---|---|---|---|
| 5 | 6 | 0 | Me | 50 % OEt, 50 % OR⁴ | Me |
| 6 | 12 | 0 | Me | 30 % OEt, 70 % OR⁴ | Me |
| 7 | 19 | 0 | Me | 55 % OMe, 45 % OR⁴ | Me |
| 8 | 8 | 2 | Me | 75 % OEt, 25 % OR⁴ | Me |

R⁴ ist in diesen Fällen ein Copolymerisat aus 5 Gew.-Teilen Hydroxypropylmethacrylat, 20 Gew.-Teilen Butylacrylat, 4 Gew.-Teilen Acrylsäure und 19 Gew.-Teilen Methylmethacrylat, das durch - dem Stand der Technik entsprechend - Lösungspolymerisation in Solvesso 150 unter Regelung durch Dodecylmercaptan erhalten worden ist. Das Gewichtsmittel des Molekulargewichtes beträgt in diesem Fall 8000 g/Mol.

Es ist dem Fachmann geläufig, daß die Umsetzung oligo- bzw. polyfunktioneller Moleküle miteinander zu einem Substanzgemisch führt, welches auch entsprechende Oligomere und Polymere der Reaktionspartner enthält. Diese werden ebenfalls beansprucht.

Überraschenderweise ist die Verwendung der erfindungsgemäßen Verbindungen besonders geeignet zur Herstellung schmutzabweisender Überzüge. Sie können beispielsweise zur Herstellung von Antigraffiti-Überzügen verwendet werden.

Die erfindungsgemäßen Verbindungen können durch einfaches Einrühren in die Überzugsmittel, die eine schmutzabweisende Wirkung zeigen sollen, eingearbeitet werden. Dabei können die Überzugsmittel auf dem Lacksektor übliche Lacksysteme sein. Überraschenderweise sind die erfindungsgemäßen Verbindungen sowohl für Lacksysteme auf Lösungsmittelbasis als auch auf Wasserbasis geeignet.

Die flüssige Phase kann auch in Form von Monomeren oder niedermolekularen Verbindungen vorliegen, die mit anderen Bindemittelkomponenten unter Bildung der Lacküberzüge reagieren. Die Lacke gemäß der Erfindung können auch sogenannte Pulverlacke sein, die also keine flüssige Phase enthalten und in Form von Pulvern auf die zu beschichtenden Substrate aufgebracht und dort zum Reagieren gebracht werden.

Den Überzugsmitteln können zur Herstellung Zusatzstoffe zugesetzt werden, wie sie beispielsweise auf dem Lacksektor üblich sind. Beispiele für solche Zusatzstoffe sind Pigmente, beispielsweise deckende, farbgebende Pigmente, wie Titandioxide oder Ruß und Effektpigmente, wie Metallschuppenpigmente und/ oder Perlglanzpigmente oder transparente Pigmente.

Andere Beispiele für Zusatzstoffe sind Füllstoffe, wie z. B. Talkum und Silikate, Weichmacher, Stabilisatoren, Lichtschutzmittel und Verlaufsmittel, wie Silikonöle.

Die gewünschte Applikationsviskosität der mit den erfindungsgemäßen Verbindungen hergestellten Überzugsmittel kann durch entsprechende Regelung des Zusatzes von Lösemitteln und/oder Wasser und/oder Zusatzstoffen eingestellt werden.

Die Aushärtung von aus den Überzugsmitteln erstellten Überzügen ist abhängig von der jeweiligen Art der Vernetzungsreaktion und kann in einem weiten Temperaturbereich von beispielsweise -10 °C bis 200 °C erfolgen.

Überraschenderweise zeigen die erfindungsgemäßen Verbindungen auch bei Aushärtung bei Raumtemperatur einen guten Antigraffiti-Effekt.

Die aus den erfindungsgemäßen Verbindungen hergestellten Überzugsmittel sind für Überzüge geeignet, die auf einer Vielzahl von Substraten haften, wie beispielsweise Holz, Kunststoff, Glas, Keramik, Textilien, Putz, Zement und insbesondere Metall. Die Überzugsmittel können auch im Mehrschichtverfahren eingesetzt werden. Sie können beispielsweise auf übliche Grundierungen, Basislacke, Füller oder bereits vorhandene Decklacke aufgetragen werden.

Die erfindungsgemäßen Verbindungen eignen sich besonders günstig für Überzugsmittel, die eine schmutzabweisende Wirkung haben sollen. Die vorliegende Erfindung betrifft somit auch die Verwendung der erfindungsgemäßen Verbindungen in Decklacken oder Klarlacken.

Mit den erfindungsgemäßen Verbindungen erhält man eine hohe schmutzabweisende Wirkung, wobei die schmutzabweisende Wirkung (z. B. Antigraffiti-Wirkung) über lange Zeiträume selbst unter ungünstigen Bewitterungsbedingungen erhalten bleibt. Auch nach mehrmaliger Reinigung der Überzugsmitteloberfläche, beispielsweise durch Lösungsmittel, handelsüblichen Graffiti-Entfernern oder Abkratzen bleibt die schmutzabweisende Wirkung erhalten.

Bei Beschmutzung der erfindungsgemäßen schmutzabweisenden Beschichtung durch Graffitis ist durch die benetzungsstörende Wirkung keine Ausbildung eines störungsfreien Graffiti-Lackfilmes möglich.

Insbesondere bei Klarlacken, bei denen eine Trübung des getrockneten Lackfilms durch Unverträglichkeiten der Antigraffiti-Verbindung mit den Lackkomponenten nachteilige Effekte bezüglich der optischen Lackqualität verursachen, zeigen erfindungsgemäße Siliconpoly(meth)acrylate durch ihre hervorragende Verträglichkeit mit dem Lacksystem und der damit verbundenen Ausbildung von klaren, transparenten Filmen besondere Vorteile.

Die Erfindung ist besonders daher überraschend, da die Güte des Antigraffiti-Effektes und die Fähigkeit der Antigraffiti-Verbindungen, in der Lackformulierung klare Filme zu bilden, oft gegenläufig sind. Überraschenderweise wurde beim Einsatz der erfindungsgemäßen Siliconpoly(meth)acrylate eine Kombination aus exzellentem Antigraffiti-Effekt und einer hervorragenden Verträglichkeit mit den Lackkomponenten und der dadurch bedingten Ausbildung von trübungsfreien transparenten Filmen gefunden.

Das erfindungsgemäße Überzugsmittel kann in üblicher Weise appliziert werden, beispielsweise durch Tauchen, Spritzen, Streichen oder auf elektrostatischem Wege.

Zur Erläuterung der Erfindung dienen die folgenden Beispiele.

### Beispiel 1

### Herstellung eines erfindungsgemäßen Siliconpoly(meth)acrylates

In ein Reaktionsgefäß mit Rührer, Thermometer und Destillationsvorrichtung werden 466,0 g Joncryl 500 (80 %ig in 2-Heptanon, Fa. Speciality Chemicals, Mijdrecht), 149,8 g Solvesso 150, 84,2 g Siloxan 1 (Ethoxygehalt 6,6 %) und 2,75 g Aluminiumacetylacetonat gegeben. Man erhitzt langsam auf 155 bis 160 °C und nimmt das entstehende Destillat kontinuierlich ab. Nach etwa 30 min bei 155 bis 160 °C ist die Reaktionsmischung bei Raumtemperatur klar und homogen (Überprüfung durch Aufbringen einer Probemenge auf eine Glasplatte). Man läßt abkühlen, gibt 4 g Celite J 10 hinzu und filtriert über einen Filter T 1000 (Fa. Seitz). Das so erhaltene Produkt ist klar, gelblich, hat eine Viskosität von etwa 340 mPas bei 25 °C. Die Ethoxygruppen sind zu mindestens 65 % umgesetzt (Umsatzkontrolle über gaschromatographische Untersuchung des Destillates), das Zahlenmittel des Molekulargewichts Mₙ liegt bei etwa 2400 g/Mol. NMR-spektroskopische Untersuchungen zeigen die erwarteten Signale des Siliconpoly(meth)acrylates.

### Beispiel 2

### Herstellung eines erfindungsgemäßen Siliconpoly(meth)acrylates

In ein Reaktionsgefäß mit Rührer, Thermometer und Destillationsvorrichtung gibt man 158,0 g Synthalat A 191 (Fa. Synthopol Chemie, Buxtehude) (63,3 %ig in Shellsol A : Butylacetat 1,35 : 1), 62,9 g Solvesso 150 und 22,3 g Siloxan 1 (Ethoxygehalt 6,3 %), erhitzt auf 65 °C und gibt 0,72 g Aluminiumacetylacetonat hinzu. Man erhitzt langsam auf 155 bis 160 °C und nimmt das entstehende Destillat kontinuierlich ab. Nach etwa 1 h gibt man 45 g Solvesso 150 hinzu und hält die Bedingungen weitere 2 h. Unter diesen Bedingungen ist die Reaktionsmischung dann klar und homogen (Überprüfung durch Aufbringen einer Probemenge auf eine Glasplatte). Man läßt abkühlen und gibt 10 % Methoxybutylacetat hinzu. Das so erhaltene Produkt ist klar, gelblich und weist einen Festkörper von 34 % auf. Die Ethoxygruppen sind zu mindestens 50 % umgesetzt (Umsatzkontrolle über gaschromatographische Untersuchung des Destillates), das Zahlenmittel des Molekulargewichts Mₙ liegt bei etwa 5000 g/Mol. NMR-spektroskopische Untersuchungen zeigen die erwarteten Signale des Siliconpoly(meth)acrylates.

### Beispiel 3

### Herstellung eines erfindungsgemäßen Siliconpoly(meth)acrylates

In ein Reaktionsgefäß mit Rührer, Thermometer und Destillationsvorrichtung gibt man 192,9 g Joncryl 500 (80 %ig in 2-Heptanon, Fa. Speciality Chemicals, Mijdrecht), 88,4 g Methoxypropylacetat und 38,7 g Siloxan 4 (Ethoxygehalt 6,4 %), erhitzt auf 120 °C und gibt 2,8 ml einer 33 %igen Lösung von Butyltitanat in Butylacetat hinzu. Man erhitzt langsam auf 150 °C, nimmt das entstehende Destillat kontinuierlich ab und hält die Bedingungen etwa 1 h. Man kühlt ab und filtriert über einen Filter T 750 (Fa. Seitz). Das so erhaltene Produkt ist fast klar und gelblich. Die Ethoxygruppen sind zu mindestens 70 % umgesetzt (Umsatzkontrolle über gaschromatographische Untersuchung des Destillates), das Zahlenmittel des Molekulargewichts Mₙ liegt bei etwa 2500 g/Mol. NMR-spektroskopische Untersuchungen zeigen die erwarteten Signale des Siliconpoly(meth)acrylates.

### Herstellung von Lacken

| Lackbeispiel Ia | |
|---|---|
| 50 | T Macrynal VSM 1565 (70 %) |
| 1 | T Methoxypropylacetat |
| 1,5 | T Solvesso 100 |
| 5 | T Butylacetat |
| 0,6 | T Dibutylzinndilaurat (1% in Xylol) |
| 2 | T erfindungsgemäße Verbindung von Beispiel 1 (oder 2) |
| 4 | T Butylacetat |
| 1 | T handelsüblicher Isocyanathärter |

werden nacheinander homogen miteinander vermischt. Anschließend wird mit einer Trockenfilmstärke von 30 bis 100 µm auf einer handelsüblichen Grundierung appliziert. Der Lack wird 7 Tage bei Raumtemperatur gehärtet. Alternativ kann 16 Stunden bei 60 °C gehärtet werden.

### Vergleichsversuch A

Es wird wie in Beispiel Ia verfahren, wobei die erfindungsgemäße Verbindung aus Herstellbeispiel 1 durch das α,ω-hydroxyfunktionelle Polydimethylsiloxan Tegopren H-Si 2111 (Th. Goldschmidt AG) ersetzt wird.

### Vergleichsversuch B

Es wird wie in Beispiel Ia verfahren, wobei die erfindungsgemäße Verbindung aus Herstellbeispiel 1 durch das Silikoncaprolacton Byk 370 (BYK) ersetzt wird.

Es werden folgende Untersuchungen durchgeführt:

### Enthaftung

Das Bonderblech wird nach der Lackaushärtung mit handelsüblichen Spraydosenlacken besprüht. Nach Trocknung dieser Lackschicht wird diese Fläche mit Klebeband versehen. Durch Abreißen des Bandes wird die Spraydosenschicht entfernt.
1 = sehr gute Sprühdosenlack-Haftung
2 = gute Sprühdosenlack-Haftung
3 = keine Sprühdosenlack-Haftung

### Filzschreiberresistenz

Das Objekt wird nach der Lackaushärtung mit handelsüblichem Filzschreiber beschrieben. Nach Trocknung wird mit einem trockenen Papiertaschentuch der Filzschreiber durch Reiben entfernt.
1 = keine Entfernbarkeit des Filzschreibers
2 = schwere Entfernbarkeit des Filzschreibers
3 = leichte Entfernbarkeit des Filzschreibers

### Chemikalienbeständigkeit

Die Chemikalientests erfolgen mit dem Lösungsmittel Xylol, Ethylglycol und Methoxypropylacetat nach DIN 53 168.

### Nach 100 WOM:

Die Enthaftungsprüfung und die Filzschreiberresistenz werden nach 100 h Weatherometer-(WOM)-sunshine-Prüfung geprüft.

### Trübung des Klarlackfilmes:

Der Lackfilm wird auf eine transparente Folie aufgetragen und die Trübung nach Trocknung des Klarlackfilmes visuell beurteilt.

### Nach 2 Tagen Trocknung bei Raumtemperatur:

| Lackbeispiel | Filzschreiberresistenz | | Enthaftung | | Transparenz im Klarlackfilm |
|---|---|---|---|---|---|
| | 48 h RT | nach 100h WOM | 48h RT | nach 100h WOM | |
| Ia (Beispiel 1) | 3 | 3 | 3 | 3 | transparent |
| Ia (Beispiel 2) | 3 | 3 | 3 | 3 | transparent |
| Vergleichsversuch A | 1 | 1 | 1 | 1 | Trübung |
| Vergleichsversuch B | 1 | 1 | 1 | 1 | transparent |

Die Chemikalienbeständigkeit ist bei allen Lackbeispielen sehr gut.

### Nach 7 Tagen Trocknung bei Raumtemperatur:

| Lackbeispiel | Filzschreiberresistenz | | Enthaftung | | Transparenz im Klarlackfilm |
|---|---|---|---|---|---|
| | 48 h RT | nach 100h WOM | 48h RT | nach 100h WOM | |
| Ia (Beispiel 1) | 3+ | 3+ | 3+ | 3+ | transparent |
| Ia (Beispiel 2) | 3 | 3 | 3 | 3 | transparent |
| Vergleichsversuch A | 2 | 2 | 2 | 2 | Trübung |
| Vergleichsversuch B | 1 | 1 | 1 | 1 | transparent |

Die Chemikalienbeständigkeit ist bei allen Lackbeispielen sehr gut.

| Lackbeispiel Ib | |
|---|---|
| 50 | T Macrynal VSM 1565 (70 %) |
| 1 | T Methoxypropylacetat |
| 1,5 | T Solvesso 100 |
| 5 | T Butylacetat |
| 0,6 | T Dibutylzinndilaurat (1% in Xylol) |
| 36 | T Kronos RW 59 |
| 2 | T Verbindung von Beispiel 2 |
| 4 | T Butylacetat |
| 1 | T handelsüblicher Isocyanathärter |

werden analog zu Lackbeispiel Ia verarbeitet.

| Lackbeispiel Ic | |
|---|---|
| 50 | T Bayhydrol VPLS 2139 |
| 1 | T Surfinol 104 E (50 %) |
| 5,5 | T Acrysol RM8 (18 % in Ethanol) |
| 24 | T Bayertitan RKB-4 |
| 2 | T Verbindung von Beispiel 2 |
| pH 7,5 | mit DMEA |
| 35 | T vollentsalztes Wasser |

werden mit einer Perlmühle homogen miteinander vermischt und mit vollentsalztem Wasser auf eine Auslaufzeit von 85" DIN 4 cup eingestellt. Anschließend wird mit einer Trockenfilmstärke von 30 bis 100 µm auf einer handelsüblichen Grundierung appliziert. Der Lack wird 7 Tage bei Raumtemperatur gehärtet. Alternativ kann 16 Stunden bei 60 °C gehärtet werden.

Die Beschichtungen nach Lackbeispiel Ib und Ic ergeben einen hervorragenden Antigraffiti-Effekt gegen Sprühlacke und Filzschreiber. Der Effekt bleibt auch nach Bewitterung oder Chemikalienbehandlung z. B. mit handelsüblichen Graffiti-Entfernern erhalten.

Aus den vorgenannten Beispielen ist die Überlegenheit der erfindungsgemäßen Verbindungen hinsichtlich der Erzielung eines permanenten Antigraffiti-Effektes leicht ersichtlich.

## Patentansprüche

1. Siliconpoly(meth)acrylate der allgemeinen Formel 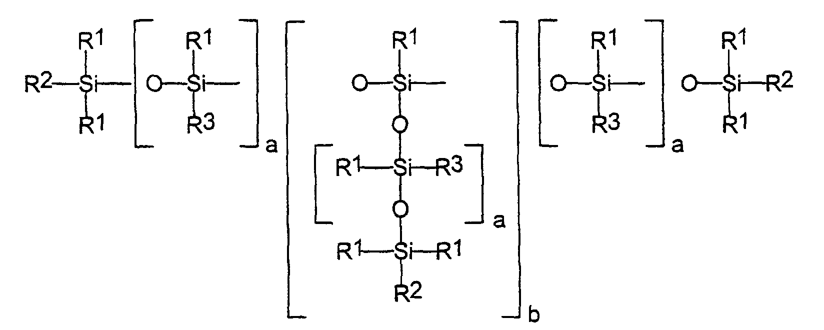 wobei die Reste
R¹ = gleiche oder verschiedene aliphatische oder aromatische Kohlenwasserstoffreste sind, wobei mindestens 90 % der Gruppen R¹ Methylgruppen entsprechen,
R² = gleiche oder verschiedene Alkoxyreste oder gleiche oder verschiedene hydroxyfunktionelle Poly(meth)-acrylatreste mit einem OH-Gehalt von 1-10 Gew.-% darstellen, wobei mindestens 20 % der Gruppen R² hydroxyfunktionelle Poly(meth)acrylatreste sind,
R³ = R¹ oder R² ist,
a = 1 bis 100 und
b = 0 bis 20 ist.

2. Siliconpoly (meth) acrylate gemäß Anspruch 1, **dadurch gekennzeichnet, daß** R¹ = Methyl ist.

3. Siliconpoly(meth)acrylate gemäß Anspruch 1 oder 2, **dadurch gekennzeichnet, daß** a = 5 bis 30 ist.

4. Siliconpoly(meth)acrylate gemäß Anspruch 1 bis 3, **dadurch gekennzeichnet, daß** b = 0 bis 3 ist.

5. Siliconpoly(meth)acrylate gemäß Anspruch 1 bis 4 **gekennzeichnet durch** ein mittleres Molekulargewicht von 2000 bis 30 000 g/Mol.

6. Siliconpoly(meth)acrylate gemäß Anspruch 1 bis 5, **dadurch gekennzeichnet, daß** b = 0 ist.

7. Verwendung von Siliconpoly(meth)acrylaten gemäß Anspruch 1 bis 6 als Zusatzstoffe in Lacken und Druckfarben in Einsatzkonzentrationen von 0,01 bis 15 %.

8. Verfahren zur Herstellung der Siliconpoly(meth)acrylate gemäß Anspruch 1 bis 6 durch metallkatalysierte nucleophile Substitution von hydroxyfunktionellen Poly(meth)acrylaten an Organoalkoxysiloxane.

9. Überzugsmittel zur Herstellung schmutzabweisender Überzüge, enthaltend eine oder mehrere Verbindungen gemäß Anspruch 1 bis 6.

10. Überzugsmittel nach Anspruch 9, **dadurch gekennzeichnet, daß** es ein oder mehrere lackübliche Lösungsmittel enthält.

11. Überzugsmittel nach Anspruch 9, **dadurch gekennzeichnet, daß** es sich um ein wäßriges Überzugsmittel handelt, das ein oder mehrere organische Lösungsmittel enthalten kann.

12. Überzugsmittel nach Anspruch 9, **dadurch gekennzeichnet, daß** die flüssige Phase in Form von Monomeren oder niedermolekularen Verbindungen vorliegt.

13. Überzugsmittel nach Anspruch 9, **dadurch gekennzeichnet, daß** es sich um einen Pulverlack handelt.

## Claims

1. Silicone poly(meth)acrylate of the general formula 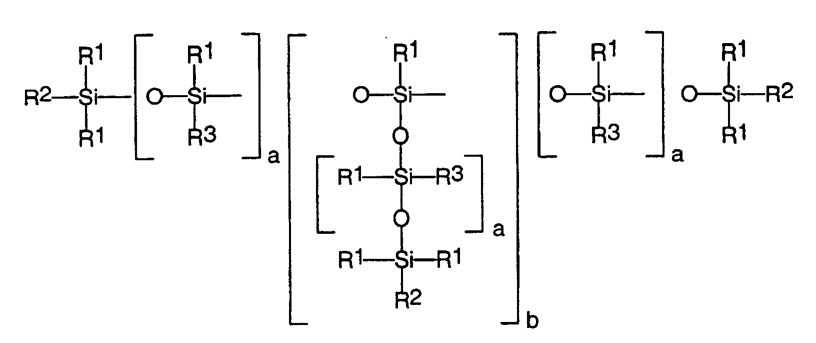 in which the radials
R¹ are identical or different aliphatic or aromatic hydrocarbon radicals, at least 90% of the groups R¹ being methyl groups,
R² are identical or different alkoxy radicals or are identical or different hydroxy-functional poly(meth)acrylate radicals having an OH content of 1-10% by weight, at least 20% of the groups R² being hvdroxv-functional poly(meth)acrylate radicals,
R³ is R¹ or R²,
a is 1 to 100 and
b is 0 to 20.

2. Silicone poly(meth)acrylate according to Claim 1, **characterized in that** R¹ is methyl.

3. Silicone poly(meth)acrylate according to Claim 1 or 2, **characterized in that** a is 5 to 30.

4. Silicone poly(meth)acrylate according to Claims 1 to 3, **characterized in that** b is 0 to 3.

5. Silicone poly(meth)acrylate according to Claims 1 to 4, **characterized by** an average molecular weight of from 2000 to 30,000 g/mol.

6. Silicone poly(meth)acrylate according to Claims 1 to 5, **characterized in that** b is 0.

7. Use of a silicone poly(meth)acrylate according to Claims 1 to 6 as an additive in coating materials or printing inks in concentrations of from 0.01 to 15%.

8. Process for preparing a silicone poly(meth)acrylate according to Claims 1 to 6 by metal-catalysed nucleophilic substitution of hydroxy-functional poly(meth)acrylates with organoalkoxysiloxanes.

9. Coating composition for producing dirt-repelling coatings, comprising one or more compounds according to Claims 1 to 6.

10. Coating composition according to Claim 9, **characterized in that** it comprises one or more customary paint solvents.

11. Coating composition according to Claim 9, **characterized in that** it is an aqueous coating composition which can comprise one or more organic solvents.

12. Coating composition according to Claim 9, **characterized in that** the liquid phase is in the form of monomers or low molecular mass compounds.

13. Coating composition according to Claim 9, **characterized in that** it is a powder coating.

## Revendications

1. Siliconepoly(méth)acrylates de formule générale 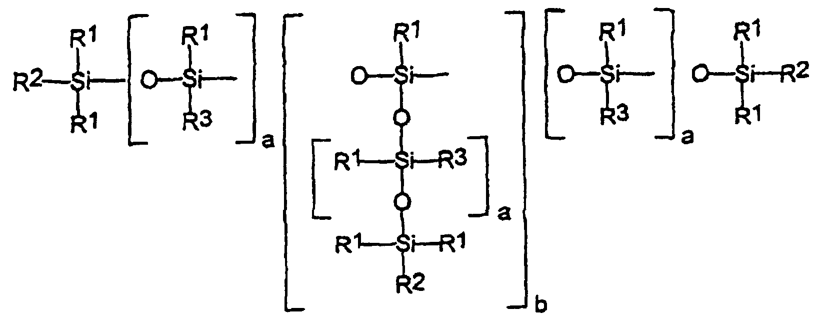 dans laquelle les radicaux
R¹ sont des radicaux hydrocarbonés aliphatiques ou aromatiques, identiques ou différents, au moins 90% des groupes R¹ correspondant à des groupes méthyle,
R² sont des radicaux alcoxy identiques ou différents ou des radicaux poly(méth)acrylate à fonction hydroxy, identiques ou différents, ayant une teneur en groupes OH de 1 à 10% en poids, au moins 20% des groupes R² étant des radicaux poly(méth)acrylate à fonction hydroxy,
R³ est égal à R¹ ou R²,
a = 1 à 100 et
b = 0 à 20.

2. Siliconepoly(méth)acrylates selon la revendication 1, **caractérisés en ce que** R¹ est le groupe méthyle.

3. Siliconepoly(méth)acrylates selon la revendication 1 ou 2, **caractérisés en ce que** a = 5 à 30.

4. Siliconepoly(méth)acrylates selon l'une quelconque des revendications 1 à 3, **caractérisés en ce que** b = 0 à 3.

5. Siliconepoly(méth)acrylates selon l'une quelconque des revendications 1 à 4, **caractérisés par** une masse moléculaire moyenne de 2 000 à 30 000 g/mole.

6. Siliconepoly(méth)acrylates selon l'une quelconque des revendications 1 à 5, **caractérisés en ce que** b = 0.

7. Utilisation des siliconepoly(méth)acrylates selon l'une quelconque des revendications 1 à 6, en tant qu'additifs dans des peintures et des encres d'imprimerie, à des concentrations d'introduction de 0,01 à 15%.

8. Procédé pour la préparation des siliconepoly(méth)acrylates selon l'une quelconque des revendications 1 à 6, par substitution nucléophile, catalysée par un métal, de poly(méth)acrylates à fonction hydroxy sur des organoalcoxysilanes.

9. Produit de revêtement pour revêtements antisalissures, contenant un ou plusieurs composés selon l'une quelconque des revendications 1 à 6.

10. Produit de revêtement selon la revendication 9, **caractérisé en ce qu'**il contient un ou plusieurs solvants usuels dans des peintures.

11. Produit de revêtement selon la revendication 9, **caractérisé en ce qu'**il s'agit d'un produit de revêtement aqueux qui peut contenir un ou plusieurs solvants organiques.

12. Produit de revêtement selon la revendication 9, **caractérisé en ce que** la phase liquide se trouve sous forme de monomères ou de composés de faible masse moléculaire.

13. Produits de revêtement selon la revendication 9, **caractérisé en ce qu'**il s'agit d'une peinture en poudre.
